# EUROPÄISCHE PATENTSCHRIFT

(11) **EP 2 612 036 B1**
(45) Veröffentlichungstag und Bekanntmachung des Hinweises auf die Patenterteilung: **06.11.2019**
(21) Anmeldenummer: 10752538.8
(22) Anmeldetag: 01.09.2010
(51) Int. Cl.: F04D 1/00, F04D 13/06, F04D 29/048

(54) **ROTATIONSPUMPE**
ROTARY PUMP
POMPE ROTATIVE

(43) Veröffentlichungstag der Anmeldung: 10.07.2013
(73) Patentinhaber: Levitronix GmbH, 8005 Zürich (CH)
(72) Erfinder: SCHÖB, Reto, CH-9200 Gossau (CH)
(74) Vertreter: Intellectual Property Services GmbH
(86) Internationale Anmeldenummer: PCT/EP2010/062789
(87) Internationale Veröffentlichungsnummer: WO 2012/028181

(56) Entgegenhaltungen:
- EP-A1- 0 900 572
- EP-A2- 1 301 979
- WO-A1-2005/019654

## Beschreibung

Die Erfindung betrifft eine Rotationspumpe mit einem lagerlosen Motor gemäss dem Oberbegriff des unabhängigen Anspruchs 1.

Für spezielle Anwendungen haben sich in der Technik magnetisch gelagerte Rotationspumpen durchgesetzt, bei welchen ein Flügelrad im Innern eines bevorzugt vollständig geschlossenen Pumpengehäuses durch magnetische Kräfte schwebend gelagert ist und durch ein Drehfeld angetrieben wird, das von einem ausserhalb des Pumpengehäuses angeordneten Stator erzeugt wird. Solche Pumpen sind insbesondere für solche Anwendungen vorteilhaft, bei denen das zu fördernde Fluid nicht verunreinigt werden darf, beispielsweise zum Fördern biologischer Flüssigkeiten wie Blut oder hochreiner Flüssigkeiten wie Reinstwasser.

Zudem eignen sich solche Rotationspumpen zum Fördern aggressiver Flüssigkeiten, die mechanische Lager in kurzer Zeit zerstören würden. Daher werden derartige Rotationspumpen besonders bevorzugt in der Halbleiterindustrie, zum Beispiel zum Fördern mechanisch aggressiver Fluide beim Bearbeiten einer Oberfläche von Halbleiterwafern eingesetzt. Als ein wichtiges Beispiel seien hier chemisch-mechanische Polierprozesse (CMP, chemical-mechanical planerisation) genannt. Bei solchen Prozessen wird eine üblicherweise als Slurry bezeichnete Suspension aus typischerweise sehr feinen Feststoffpartikeln und einer Flüssigkeit auf einen rotierenden Wafer aufgebracht und dient dort zum Polieren bzw. Läppen der sehr feinen Halbleiterstrukturen. Ein anderes Beispiel ist das Aufbringen von Fotolack auf den Wafer, oder das Aufrauen von Oberflächen von Computerfestplatten um ein Anhaften der Schreib/Leseköpfe durch Adhäsionskräfte, also zum Beispiel durch Van-der-Waals Kräfte zu verhindern.

Dabei ist bei einem lagerlosen Motor der Rotor oft scheiben- oder ringförmig ausgebildet, wobei in vielen Fällen die Höhe des Rotors kleiner als der halbe Durchmesser des Rotors ist.

Ein solcher lagerloser Motor wird beispielsweise in der WO-A-96/31934 oder in einer anderen Variante auch in der EP-A-0 900 572 offenbart. Mit dem Begriff lagerloser Motor ist im Rahmen dieser Anmeldung gemeint, dass der Rotor vollkommen magnetisch gelagert ist, wobei keine separaten mechanischen Lager vorgesehen sind. Der Stator ist dazu als Lager- und Antriebsstator ausgestaltet, er ist also sowohl Stator des elektrischen Antriebs als auch Stator der magnetischen Lagerung. Dazu umfasst die Wicklung des Stators eine Antriebswicklung der Polpaarzahl p sowie eine Steuerwicklung der Polpaarzahl p±1. Mit diesen beiden Wicklungen lässt sich ein magnetisches Drehfeld erzeugen, welches zum einen ein Drehmoment auf den Rotor ausübt, das dessen Rotation bewirkt, und welches zum anderen eine beliebig einstellbare Querkraft auf den Rotor ausübt, sodass dessen radiale Position aktiv steuerbar bzw. regelbar ist.

Somit sind drei Freiheitsgrade des Rotors aktiv regelbar. Bezüglich dreier weiterer Freiheitsgrade, nämlich seiner axialen Auslenkung in Richtung der Drehachse und Verkippungen bezüglich der zur Drehachse senkrechten Ebene (zwei Freiheitsgrade) ist der Rotor passiv magnetisch, das heisst nicht ansteuerbar, sondern durch Reluktanzkräfte magnetisch stabilisiert.

Insbesondere wenn der Rotor als scheibenförmiger oder ringförmiger Rotor ausgebildet ist, stellt die passive magnetische Lagerung hohe Anforderungen an die axiale Stabilisierung bzw. an die Stabilisierung gegen Verkippung, weil der in axialer Richtung und gegen Verkippung nur passiv über Reluktanzkräfte magnetisch gelagerte Rotor nur eine geringe axiale Steifigkeit aufweist.

Damit der auftretende Axialschub, der hauptsächlich durch die zwischen dem Einlass und dem Auslass der Pumpe herrschenden Druckdifferenz verursacht wird, nicht vollständig von den Axiallagern aufgenommen werden muss, sind in Zentrifugalpumpen ganz verschiedene Massnahmen bekannt, um den Rotor bezüglich der axialen Richtung auszubalancieren.

Besonders gravierend ist das Problem des Axialschubausgleichs somit bei Pumpen mit magnetisch gelagertem Rotor, insbesondere wenn die axiale Lagerung vollkommen ohne mechanische Lager magnetisch über Reluktanzkräfte erfolgt. Zur Ausbalancierung des Rotors eines solchen lagerlosen Motors stehen neben der magnetischen Reluktanzkraft nur konstruktive Massnahmen zur Verfügung, welche die Axialposition über fluiddynamische Ausgleichskräfte beeinflussen.

Insbesondere auch bei solchen Zentrifugalpumpen, die nach dem Prinzip des lagerlosen Motors arbeiten, sind heute bekannte Massnahmen zum axialen Ausbalancieren des Rotors für hohe Pumpleistungen oder bei höher viskosen Fluiden, wie beispielsweise Photoresist oder Slurry, welche Viskositäten von bis zu über 100 Centipoise aufweisen können, oft nicht ausreichend.

Bei der Ausgestaltung solcher Rotationspumpen als Zentrifugalpumpen besteht das Problem, dass sich die Wickelköpfe des Stators und der Auslass oder eventuell auch der Einlass des Pumpengehäuses räumlich behindern.

Zur Lösung dieses Problems wird in der WO-A-96/31934 eine Pumpe mit einem sogenannten Tempelmotor vorgeschlagen, bei dem die Spulenkerne des Stators jeweils die Form eines "L" haben, wobei der lange Schenkel jeweils parallel zur Rotationsachse verläuft, während der kurze Schenkel radial einwärts zur Rotationsachse gerichtet ist. Der Stator, der als Lager- und Antriebsstator ausgestaltet ist, hat zwei Wicklungen, nämlich die Antriebswicklung und die Steuerwicklung, welche als diskrete Spulen ausgeführt sind und um die langen Schenkel der L-förmigen Spulenkerne gewickelt sind. Ein solcher Tempelmotor kommt ohne Wickelköpfe aus, sodass der Auslass des Pumpengehäuses ohne räumliche Behinderung auf der Höhe des Flügelrads in Form eines radialen Auslasskanals angeordnet werden kann. Das heisst, dass es beim Tempelmotor möglich ist, dass ein radialer Austrittskanal am Pumpengehäuse so angeordnet werden kann, dass der Antrieb, genauer eine magnetische Statorebene des Stators des Motors und eine Mittelebene des Rotors mit einer Mittelachse des radialen Austrittskanals koinzidiert.

D.h., sowohl die magnetische Mittelebene des Antriebs- und Lagerstators als auch die Mittelebene des Rotor liegen mit einer Mittelachse des radialen Auslasskanals des Pumpengehäuses auf gleicher Höhe, so dass die hydraulischen Kräfte, die durch die Abführung des Fluids über den radialen Auslasskanal auf den Rotor wirken, in Bezug auf die axiale Richtung bzw. in Bezug auf die Mittelebene des Rotors symmetrisch auf den Rotor wirken. Dadurch kompensieren sich die in axialer Richtung auf den Rotor wirkenden hydraulischen Kräften, so dass keine zusätzlichen Massnahmen zur Kompensation solcher axialen Schubkräfte notwenig sind. Kurz gesagt: Der Tempelmotor ermöglicht eine in Bezug auf die Mittelebene des Rotors symmetrische Anordnung des Auslasses oder auch des Einlasses am Pumpengehäuse.

Diese Ausgestaltung als Tempelmotor, z.B. gemäss Fig. 12 der WO 96/31934, unterliegt jedoch der Einschränkung, dass sie wegen der hohen Bauform einen relativ grossen Platzbedarf hat und im Aufbau aufwendig ist. Ausserdem sind sogenannte Back-toBack Rotoranordnungen (siehe unten) je nach Bauform zwar im Prinzip möglich, je nach konkreter Ausführung des Pumpengehäuses jedoch oft nur schwierig oder gar nicht realisierbar, insbesondere weil eine der Zuführungen zum Pumpengehäuse durch den Tempel des Tempelmotors geführt werden muss.

Die erwähnte Back-to-Back Anordnungen sind wie erwähnt in Beispielen ebenfalls in der WO 96/31934 gezeigt. Hier ist der Rotor in Bezug auf die axiale Richtung, die gleich der Rotationsachse des Rotors ist, beidseitig mit Fördermitteln, wie zum Beispiel mit Förderschaufeln ausgestattet, so dass der Rotor über zwei axial gegenüberliegende Einlasskanäle beidseitig und im wesentlichen gleichmässig mit dem Druck des in das Pumpengehäuse einfliessenden Fluids beaufschlagt wird, so dass dadurch ein resultierender Axialschub im wesentlichen verhindert ist. Der Antrieb ist aber hier nur mittels eines Tempelmotors möglich, da ansonsten die Auslasskanäle des Pumpengehäuses in Bezug auf die Mittelebene der Rotorscheibe asymmetrisch angeordnet werden müssten, was wiederum über die Auslasskanäle zu massiven hydraulischen Axialkräfte auf den Rotor führen würde.

In der EP 0 900 572 A1 ist eine andere Rotationspumpe mit einem lagerlosen Motor gezeigt, die zwar auf den baulich sehr grossen und aufwändigen Tempelmotor verzichtet, was aber durch eine stark asymmetrische Anordnung von Einlass und Auslass des Pumpengehäuses erkauft wird, so dass entsprechend verhältnismässig grosse axiale hydraulische Kräfte auftreten, die nur bis zu einer bestimmten Grösse überhaupt und nicht in allen wünschenswerten Betriebszuständen mit speziellen baulichen Massnahmen kompensierbar sind. Die Einsatzbereiche für diese Art von Pumpen sind somit entsprechend eingeschränkt.

Mit Ausnahme von den oben beschriebenen Tempelmotoren besteht ein grundsätzliches Problem der lagerlosen Motoren, die in axialer Richtung nur über Reluktanzkräfte passiv magnetisch gelagert sind, zusammengefasst darin, dass der Antrieb, also der Stator des Motors mit einer Mittelebene des Rotors koinzidiert. D.h., eine Mittelebene des Antriebs- und Lagerstators und die Mittelebene des Rotor liegen auf gleicher Höhe, so dass zumindest der Auslasskanal des Pumpengehäuses in Bezug auf die Mittelebene des Stators bzw. des Rotors stark asymmetrisch angeordnet werden muss, was zu entsprechenden verhältnismässig grossen axialen hydraulischen Kräften führt, die aufwändig mit anderen Mitteln kompensiert werden müssen.

Kurz gesagt: Der Stator verhindert eine in Bezug auf die Mittelebene des Rotors symmetrische Anordnung des Auslasses oder des Einlasses.

Die Aufgabe der Erfindung ist es daher, eine neue, vollständig magnetisch gelagerte Rotationspumpe vorzuschlagen, die die aus dem Stand der Technik bekannten Nachteile vermeidet, eine kompakte Bauform aufweist und bei welcher das Auftreten von axialen Schubkräften im wesentlichen verhindert ist.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit eine Rotationspumpe, umfassend einen in einem Pumpengehäuse angeordneten magnetischen Rotor mit einer magnetischen Rotorebene, welcher Rotor zum Fördern eines Fluids mit einem Antrieb in Wirkverbindung steht. Am Pumpengehäuse sind eine Eintrittsöffnung zum Einlass des Fluids in das Pumpengehäuse, sowie ein radialer Auslasskanal zur Beförderung des Fluids aus dem Pumpengehäuse heraus vorgesehen. Dabei ist der Antrieb ein lagerloser Motor mit einem als Lager- und Antriebsstator ausgestalteten Stator mit einer magnetischen Statorebene, wobei der Stator eine in der Statorebene liegende Antriebsspule und Lagerspule und / oder eine Antriebslagerspule trägt. Der Rotor ist innerhalb des Stators magnetisch berührungslos gelagert, wobei eine axiale Höhe des Rotors kleiner oder gleich einem halben Durchmesser des Rotors ist, so dass der Rotor in Bezug auf die magnetische Statorebene sowohl gegen eine axiale Verschiebung als auch gegen eine Verkippung aus einer Gleichgewichtslage passiv durch Reluktanzkräfte magnetisch stabilisiert ist. Erfindungsgemäss ist der Auslasskanal im Bereich des Stators derart radial vom Pumpengehäuse nach aussen weg geführt, dass eine Mittelachse des radialen Auslasskanals mit der magnetischen Rotorebene oder mit der magnetischen Statorebene koinzidiert.

Wesentlich für die Erfindung ist somit, dass der Auslasskanal im Bereich des Stators derart radial vom Pumpengehäuse nach aussen weg geführt ist, dass die Mittelachse des radialen Auslasskanals mit der magnetischen Rotorebene und / oder mit der magnetischen Statorebene koinzidiert. Das heisst, die Verlängerung der Mittelachse des Auslasskanals definiert zusammen mit der magnetischen Statorebene und / oder zusammen mit der magnetischen Rotorebene eine gemeinsame Ebene im Raum, die im Wesentlichen senkrecht zu einer Drehachse des Rotors steht, wobei die Antriebsspulen und Lagerspulen in der Statorebene liegen. Also anders als beim Tempelmotor, bei dem die Antriebsspulen und die Lagerspulen senkrecht zur magnetischen Statorebene um die langen Schenkel der L-förmigen Spulenkerne gewickelt sind.

D.h., die magnetische Mittelebene des Antriebs- und Lagerstators und / oder die Mittelebene des Rotor liegen gemeinsam mit den Spulenachsen der Antriebs- und Lagerspulen und gemeinsam mit einer Mittelachse des radialen Auslasskanals des Pumpengehäuses auf im Wesentlichen gleicher Höhe, so dass die hydraulischen Kräfte, die durch die Abführung des Fluids über den radialen Auslasskanal auf den Rotor wirken, in Bezug auf die axiale Richtung bzw. in Bezug auf die Mittelebene des Rotors symmetrisch auf den Rotor wirken. Dadurch kompensieren sich die in axialer Richtung auf den Rotor wirkenden hydraulischen Kräften, so dass keine zusätzlichen Massnahmen zur Kompensation solcher axialen Schubkräfte notwenig sind. Die Erfindung ermöglicht somit erstmals eine in Bezug auf die Mittelebene des Rotors symmetrische Anordnung des Auslasses oder im Prinzip auch des Einlasses am Pumpengehäuse, wobei als Antrieb ein eingangs beschriebener lagerloser Motor vorgesehen wird, der nicht als Tempelmotor ausgestaltet ist. Dadurch, dass der Antrieb, anders als im Stand der Technik, nicht als Tempelmotor ausgestaltet ist, hat die erfindungsgemässe Rotationspumpe eine platzsparende kompakte Bauform und der Antrieb ist sehr einfach in seinem Aufbau.

Zur Aufnahme des Auslasskanals weist der Stator in Umfangsrichtung bevorzugt eine entsprechende Lücke auf, in welcher der radiale Auslasskanal angeordnet und vom Pumpengehäuse weg über den Stator hinaus nach aussen geführt ist. Der Stator selbst kann dabei ferromagnetisch sein oder auch aus einem nicht ferromagnetischen Material gefertigt sein, was wesentlich durch die Art der verwendeten Spulenkerne mit bestimmt ist, wie weiter unten noch ausführlicher erläutert werden wird.

Die Antriebsspule und / oder die Lagerspule und / oder die Antriebslagerspule sind in an sich bekannter Weise an einem Spulenkern vorgesehen, wobei eine Antriebsspule und eine Lagerspule jeweils auf ein und demselben Spulenkern vorgesehen werden können oder aber auch eine Antriebsspule und eine Lagerspule jeweils getrennt auf einem eigenen Spulenkern vorgesehen sein können. Bevorzugt kann an Stelle von getrennten Antriebsspulen und Lagerspulen auch eine Antriebslagerspule vorgesehen sein, d.h. eine einzige Spule, der sowohl der Antriebsstrom als auch der Lagerstrom von einer geeigneten gesteuerten oder geregelten elektrischen Energiequelle im Betriebszustand aufgeprägt wird. Solche Antriebslagerspulen sind im Prinzip bekannt und sind z.B. bereits in der EP 1 158 648 A1 oder der EP 1 301 979 B1 beschrieben.

Der Spulenkern selbst kann dabei verschieden ausgeführt sein. Der Spulenkern kann beispielweise in Form eines E-förmigen ferromagnetischen Spulenkerns am Stator vorgesehen sein. Ein E-förmiger Spulenkern wird insbesondere dann vorteilhaft verwendet, wenn der Stator aus einem nicht ferromagnetischen Material besteht. Bei Verwendung eines Stators, der nicht aus einem fermagnetischen Material, wie beispielweise Eisen besteht, kann über den nicht-ferromagnetischen Stator der magnetische Fluss nicht geschlossen werden. In einem solchen Fall können E-förmige Spulenkerne, die in Form eines "E" aus drei, im Speziellen mehr oder weniger parallelen Schenkeln bestehen, wobei die Spule bevorzugt auf den mittleren der drei Schenkel gewickelt ist. Bei einer solchen Anordnung wird der magnetische Fluss im bzw. über E-förmigen Kern selbst geschlossen, so dass ein zusätzlicher magnetsicher Rückschluss über einen ferromagnetischen Stator zwar möglich, aber im Prinzip nicht notwendig ist.

Insbesondere dann, wenn der Stator aus einem ferromagnetischen Material besteht, kann der Spulenkern in Form eines stabförmigen, bevorzugt ebenfalls ferromagnetischen Spulenkern am Stator, zum Beispiel an einer Oberseite oder einer Unterseite des Stators vorgesehen sein. Bei einem stabförmigen Spulenkern kann der magnetische Fluss nicht im oder über den Spulenkern selbst geschlossen werden, sondern muss beispielweise über einen ferromagnetische Stator geschlossen werden.

Selbstverständlich kann der bevorzugt ferromagnetische Spulenkern auch in Form eines inneren Spulenkerns innerhalb des ebenfalls bevorzugt ferromagnetischen Stators vorgesehen sein, oder aber der vorzugsweise ferromagnetische Spulenkern kann in einem anderen Ausführungsbeispiel auch in Form eines sich zum Rotor hin erstreckenden Statorzahns am Stator ausgebildet sein.

Die zuvor beispielhaft angegebenen und darüber hinaus noch möglichen Anordnungen und Ausführungen von mit Antriebsspulen und / oder Lagerspulen und / oder Antriebslagerspulen bewickelten Spulenkernen sind dem Fachmann an sich bekannt und können auch in weiteren, hier nicht näher beschriebenen Ausführungsformen oder Kombinationen je nach Anwendung vorteilhaft bei einem Antrieb für eine erfindungsgemässe Rotationspumpe verwendet werden.

Dabei ist es insbesondere möglich, dass zwei verschiedene Spulenkerne an ein und demselben Stator geometrisch verschieden ausgebildet sind und / oder zwei Antriebsspulen und / oder zwei Lagerspulen in Bezug auf die Umfangsrichtung des Stators asymmetrisch geordnet sind.

Eine solche asymmetrische Anordnung der Lager- und / oder Antriebsspulen am Stator kann insbesondere dann vorteilhaft vorgenommen werden oder sogar zwingend notwendig sein, wenn der Stator eine mehr oder weniger grosse Lücke aufweist, durch die der Auslasskanal vom Pumpengehäuse weg radial nach aussen geführt ist. Besonders dann, aber nicht nur wenn der Stator ein ferromagnetischer Stator ist, kann durch die Lücke im Stator im magnetischen Fluss eine erhebliche Asymmetrie hervorgerufen werden, die zum Beispiel durch eine geeignet gewählte asymmetrische Ausgestaltung und / oder Anordnung der Spulenkerne für die Antriebs- und Lagerspulen wieder derart kompensiert werden, dass eine sichere aktive radiale Lagerung und ein sicherer Antrieb des Rotors trotzdem gewährleistet bleibt.

Besonders bevorzugt wird der Rotor in Bezug auf eine axiale Drehachse, die im Wesentlichen senkrecht auf der Rotorebene und / oder der Statorebene steht, beidseitig mit dem in das Pumpengehäuse einströmende Fluid beaufschlagt. Das kann vorteilhaft zum Beispiel dadurch realisiert sein, dass in Bezug auf die Rotorebene zwei gegenüberliegende Einlasskanäle vorgesehen sind. Auch ist es zum Beispiel möglich, dass nur ein zentral um die Drehachse angeordneter, axial verlaufender Einlasskanal vorgesehen ist, der sich durch den Rotor hindurch erstreckt, wobei an einem solchen axialen Einlasskanal in Bezug auf die magnetische Rotorebene beidseitig Austrittsöffnungen zur beiseitigen Beaufschlagung des Rotors mit dem Fluid vorgesehen sind. Es versteht sich von selbst, dass dann, wenn der Rotor beidseitig gleichzeitig mit dem zu pumpenden Fluid beaufschlagt wird, der Rotor besonders bevorzugt auch beidseitig mit Mittel zum Pumpen, im Speziellen mit Rotorflügeln ausgestattet ist, so dass in Bezug auf die Mittelebene de Rotors beidseitig eine symmetrische Pumpleistung hin zum radialen Auslasskanal erzeugbar ist.

Es versteht sich in diesem Zusammenhang übrigens von selbst, dass am Pumpengehäuse in speziellen Fällen natürlich auch mehr as ein Auslasskanal vorgesehen sein kann, über den ein zu pumpendes Fluid unter erhöhtem Druck nach aussen aus dem Pumpengehäuse gefördert werden kann.

Im Folgenden wird die Erfindung an Hand der Zeichnung näher erläutert. Es zeigen in schematischer Darstellung:
- Fig. 1a: ein erstes Ausführungsbeispiel einer erfindungsgemässen Rotationspumpe mit E-förmigem Spulenkern;
- Fig. 1b: einen Schnitt entlang der Schnittlinie I-I gemäss Fig. 1a;
- Fig. 2a: ein zweites Ausführungsbeispiel einer erfindungsgemässen Rotationspumpe mit E-förmigem Spulenkern;
- Fig. 2b: ein Ausführungsbeispiel gemäss Fig. 2a mit stabförmigem Spulenkern;
- Fig. 2c: ein Ausführungsbeispiel gemäss Fig. 2b mit asymmetrisch angeordneten Spulenkernen;
- Fig. 2d: ein Ausführungsbeispiel gemäss Fig. 2b mit symmetrisch angeordneten Spulenkernen;
- Fig. 3a: ein Ausführungsbeispiel einer erfindungsgemässen Rotationspumpe mit einem einzigen axialen Einlasskanal;
- Fig. 3b: einen Schnitt entlang der Schnittlinie II-II gemäss Fig. 3a;
- Fig. 4: ein anderes Ausführungsbeispiel gemäss Fig. 3a mit einem gedeckten Rotor;
- Fig. 5a: ein weiteres Ausführungsbeispiel gemäss Fig. 3a mit gedecktem Rotor;
- Fig. 5b: einen Schnitt entlang der Schnittlinie III-III gemäss Fig. 5a;
- Fig. 5c: einen Schnitt entlang der Schnittlinie IV-IV gemäss Fig. 5a;
- Fig. 6a: ein viertes Ausführungsbeispiel gemäss Fig. 3a mit gedecktem Rotor und asymmetrischem Auslasskanal;
- Fig. 6b: einen Schnitt entlang der Schnittlinie V-V gemäss Fig. 6a;
- Fig. 6c: einen Schnitt entlang der Schnittlinie VI-VI gemäss Fig. 6a;
- Fig. 7: ein Ausführungsbeispiel einer erfindungsgemässen Rotationspumpe mit einem inneren Spulenkern innerhalb des Stators;
- Fig. 8: ein Ausführungsbeispiel mit einem sich zum Rotor erstreckenden Statorzahn;
- Fig. 9a: ein zweites Ausführungsbeispiel gemäss Fig. 8 mit einer Gehäuseschale für das Pumpengehäuse;
- Fig. 9b: einen Schnitt entlang der Schnittlinie VII-VII gemäss Fig. 9a;
- Fig. 10a: ein anderes Ausführungsbeispiel gemäss Fig. 8 mit Eisenring als magnetischer Lückenschluss;
- Fig. 10b: einen Schnitt entlang der Schnittlinie VIII-VIII gemäss Fig. 10a;
- Fig. 11a: ein weiteres Ausführungsbeispiel gemäss Fig. 8 mit geometrisch verschieden ausgebildeten Spulenkernen;
- Fig. 11b: einen Schnitt entlang der Schnittlinie IX-IX gemäss Fig. 11a.

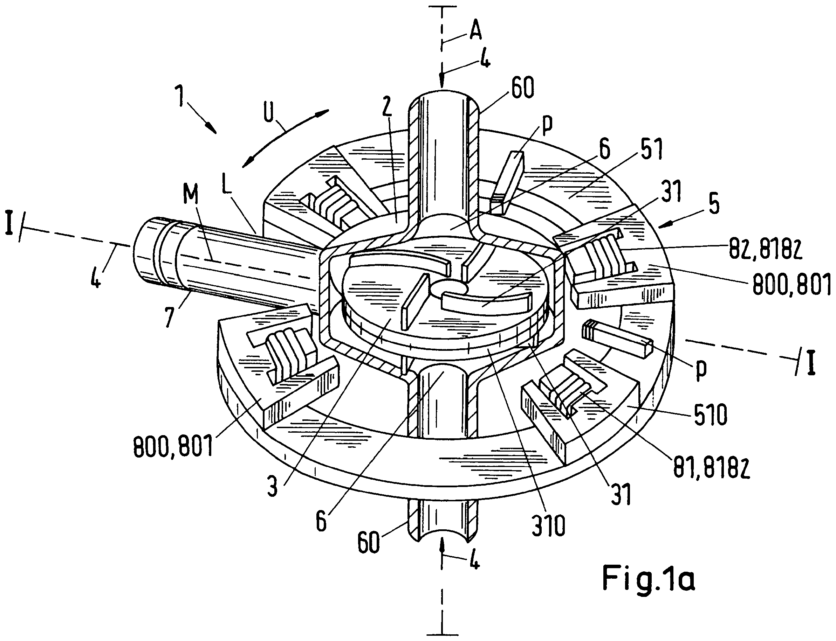

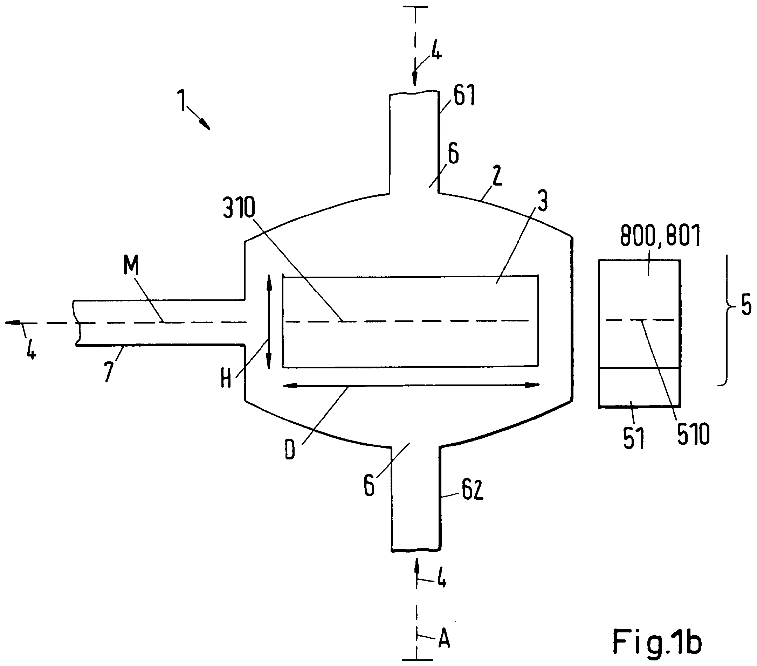

Fig. 1a zeigt in schematischer Weise in leicht perspektivischer Darstellung ein einfaches erstes Ausführungsbeispiel einer erfindungsgemässen Rotationspumpe mit E-förmigen Spulenkernen, wobei anhand der Fig. 1b zum besseren Verständnis zusätzlich ein Schnitt entlang der Schnittlinie I-I gemäss Fig. 1a schematisch dargestellt ist.

Die erfindungsgemässe Rotationspumpe, die im folgenden gesamthaft mit dem Bezugszeichen 1 bezeichnet wird, umfasst einen in einem Pumpengehäuse 2 angeordneten magnetischen Rotor 3 mit einer magnetischen Rotorebene 310, welcher Rotor 3 zum Fördern eines Fluids 4 mit einem Antrieb 5 in magnetischer Wechselwirkung steht. Der Antrieb 5 ist ein lagerloser Motor mit einem als Lager- und Antriebsstator ausgestalteten Stator 51 mit einer magnetischen Statorebene 510, wobei der Stator 51 mehrere in der Statorebene 510 liegende Antriebsspulen 81 und Lagerspulen 82 trägt oder aber auch gleichzeitig oder alternativ Antriebslagerspulen 8182 tragen kann, die entweder jeweils auf verschiedenen Spulenkernen 800, 801 vorgesehen sind, oder gleichzeitig oder alternativ aber auch jeweils zu zweien oder mehreren auf ein und demselben Spulenkern 800, 801 vorgesehen sein können.

Im speziellen Ausführungsbeispiel gemäss Fig. 1a sind beispielhaft genau vier Spulenkerne 800, 801 vorgesehen. In dem Fall sind die darauf gewickelten Spulen Antriebslagerspulen 8182. Es versteht, dass bei ansonsten gleicher Geometrie der Rotationspumpe 1 auch mehr als genau vier Spulenkerne am Stator 51 vorgesehen sein können. Dann ist es möglich, dass entweder getrennte Antriebsspulen 81 und Lagerspulen 82 vorgesehen sind oder auch gleichzeitig oder alternativ Antriebslagerspulen 8182 verwendet werden.

Der Rotor 3 ist in an sich bekannter Weise innerhalb des Stators 51 magnetisch berührungslos gelagert. Es handelt sich dabei um einen dünnen scheibenförmigen oder ringförmigen Rotor 3, der dadurch charakterisiert ist, dass eine axiale Höhe H des Rotors 3 kleiner oder gleich einem halben Durchmesser D des Rotors 3 ist. Der dünne scheiben- oder kreisringförmige Rotor 3 ist in an sich ebenfalls dem Fachmann bekannter Weise in Bezug auf die magnetische Statorebene 510 sowohl gegen eine axiale Verschiebung als auch gegen eine Verkippung aus einer Gleichgewichtslage passiv durch Reluktanzkräfte magnetisch stabilisiert.

Das heisst, bezüglich der axialen Richtung ist die Lage des Rotors 3 gegen Verkippung in Bezug auf die Rotorebene 310 bzw. gegen eine Verschiebung entlang der Drehachse A nur passiv magnetisch über Reluktanzkräfte stabilisiert, während eine Lage des Rotors 3 in Bezug auf die radiale Richtung über die Antriebspule 81 und / oder Lagerspulen 82 und / oder die Antriebslagerspulen 8182 aktiv mittels magnetischer Drehfelder beeinflusst werden kann. Der Drehantrieb des Rotors 3 erfolgt selbstverständlich ebenfalls über entsprechende magnetische Drehfelder, die durch die Antriebspule 81 und / oder Lagerspulen 82 und / oder die Antriebslagerspulen 8182 generiert werden.

Beidseitig zu der magnetischen Rotorebene 310 ist jeweils eine Eintrittsöffnung 6 zum Einlass des Fluids 4 derart am Pumpengehäuse 2 vorgesehen, dass der Rotor 3 in Bezug auf die Drehachse A beidseitig mit dem in das Pumpengehäuse 2 einströmenden Fluid 4 über zwei gegenüberliegende Einlasskanäle 60 beaufschlagbar ist. Der Rotor 3 ist daher auch beidseitig mit Mitteln 31 zum Pumpen, also zum Beispiel mit Rotorflügeln 31 oder Rotorschaufeln 31 ausgestattet, so dass in Bezug auf die Rotorebene 310 beidseitig eine symmetrische Pumpleistung hin zum radialen Auslasskanal 7 erzeugbar ist. In der Schnittdarstellung der Fig. 1b sind die Rotorflügel 31 aus Gründen der Übersichtlichkeit nicht gezeigt.

Dadurch, dass der Rotor 3 in Bezug auf die magnetische Rotorebene 310 beidseitig mit dem zu pumpenden, in das Pumpengehäuse 2 einfliessende Fluid 4 gleichzeitig und symmetrisch beaufschlagt wird, treten durch das in das Pumpengehäuse 2 einströmende Fluid 4 im Wesentlichen keine resultierenden hydraulischen Kräfte in axialer Richtung auf, die den Rotor 3 in axialer Richtung im Betriebszustand destabilisieren könnten.

Erfindungsgemäss ist der Auslasskanal 7 im Bereich des Stators 51 derart durch eine Lücke L im Stator 51 radial vom Pumpengehäuse 2 nach aussen weg geführt, dass eine Mittelachse M des radialen Auslasskanals 7 mit der magnetischen Rotorebene 310 und mit der magnetischen Statorebene 510 bis auf eventuell sehr kleine, betriebsbedingte bzw. bauartbedingte Abweichungen koinzidiert.

Unter magnetischer Rotorebene 310 ist somit im Rahmen dieser Anmeldung diejenige Ebene des Rotors 3 bezeichnet, die mit der Mittelachse M des radialen Auslasskanals 7 koinzidiert, wenn alle resultierenden Kräfte auf den Rotor im Wesentlichen verschwinden, die in axialer Richtung auf den Rotor 3 wirken. Entsprechend ist die magnetische Statorebene 510 diejenige Ebene des Stators 5, die mit der magnetischen Rotorebene 310 koinzidiert, wenn alle resultierenden Kräfte im Wesentlichen verschwinden, die in axialer Richtung auf den Rotor 3 wirken.

Das heisst insbesondere, dass im Rahmen der vorliegenden Anmeldung die magnetische Rotorebene 310 bzw. die magnetische Statorebene 510 in vorgenannter Weise über die Kompensation aller axialen Kräfte im Gleichgewicht definiert sind und nicht über die Geometrie des Stators 51 oder des Rotors 3. So braucht die magnetische Statorebene 510 nicht zwingend identisch mit der geometrischen axialen Symmetrieebene des Stators 51 zu sein, die in der Regel über die halbe geometrische Höhe des Stators 51 festgelegt ist.

Sehr häufig, aber durchaus nicht zwingend, ist die magnetische Rotorebene 310 des Rotors 3 identisch mit der geometrischen axialen Symmetrieebene des Rotors 3, die über die halbe Höhe H des Rotors 3 definiert ist. Das liegt daran, dass der Rotor 3 in den meisten praktischen Fällen symmetrisch in Bezug auf die axiale Richtung, also in Bezug auf die Drehachse A ausgebildet ist, da so auf besonders einfache Weise alle resultierenden axial wirkenden Kräfte zum Verschwinden gebracht werden können, so dass der Rotor 3 zuverlässig über die relativ schwachen magnetischen Reluktanzkräfte im Betriebszustand in axialer Richtung stabilisierbar ist. Der Kern des Rotors 3 wir in der Regel dabei durch einen Kern aus einem permanentmagnetischen Material gebildet, der zum Beispiel fluiddicht von einem Gehäuse, z.B. von einem Kunststoffgehäuse umgeben ist, auf welchem aussen dann die Rotorschaufeln 31 vorgesehen sind. Solche Rotoren 3 sind aus dem Stand der Technik im Prinzip seit langem bekannt.

Wie insbesondere der Fig. 1b deutlich zu entnehmen ist, ist die magnetische Statorbene 510 keineswegs in jedem Fall identisch mit der geometrischen Symmetrieebene auf halber geometrischer Höhe des Stators 51. Das liegt unter anderem daran, dass der spezielle Stator 51 gemäss Fig. 1a bzw. Fig. 1b aus Gewichtsgründen nicht aus einem ferromagnetischen Material, sondern aus einem sehr leichten Kunststoff ist, welcher Stator 51 lediglich als Träger für die E-förmigen Spulenkerne 800, 801 dient. Der Stator 51 braucht im vorliegenden Beispiel deshalb nicht als ferromagnetischer Stator ausgebildet zu sein, weil die Spulenkerne 800, 801 E-förmig mit drei Schenkeln ausgebildet sind, wobei die Spulen jeweils auf den mittleren Schenkel gewickelt sind, so dass der Rückschluss des magnetischen Flusses über die Schenkel der E-förmigen Spulenkerne 800, 801 erfolgen kann und nicht über den Stator 51 erfolgen muss. Es versteht sich dabei, dass der Stator 51 natürlich trotzdem auch dann aus einem ferromagnetischen Material sein kann, wenn wenn E-förmige Spulenkerne 800, 801 verwendet werden.

Die Spulenkerne 800, 801 sind dabei derart entlang einer Umfangsrichtung U am Stator 51 verteilt, dass ein zuverlässiger Antrieb und eine sichere Lagerung des Rotors 3 in radialer Richtung in jedem Betriebszustand möglich und aktiv über die Antriebspulen 81 und / oder über die Lagerspulen 82 und / oder die Antriebslagerspulen 8182 gewährleistet ist.

Zur Steuerung bzw. Regelung des Rotors 3 im Betriebszustand sind bevorzugt Positionssensoren P am Stotor 51 vorgesehen, mit welchen die Position des Rotors 3 im Betriebszustand jederzeit bestimmt und zur aktiven Regelung des Rotors 3 verwendet werden kann.

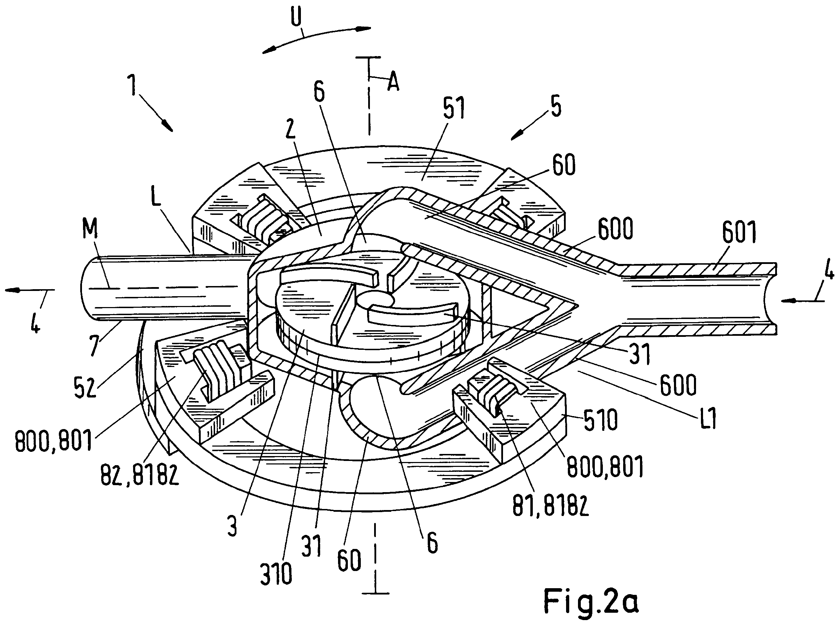

In Fig. 2a ist ein zweites Ausführungsbeispiel einer erfindungsgemässen Rotationspumpe 1 mit E-förmigem Spulenkern dargestellt. Das Beispiel der Fig. 2a ist im Wesentlichen identisch zu demjenigen der Fig. 1a bzw. Fig. 1b, jedoch mit der Ausnahme, dass das Ausführungsbeispiel gemäss Fig. 2a in axialer Richtung, also in Bezug auf die Drehrichtung A eine deutlich kompaktere Bauform aufweist. Das wird dadurch erreicht, dass die Zuleitungen zu den beiden Eintrittsöffnungen 6 am Pumpengehäuse 2 nicht durch zwei gegenüberliegende, axial verlaufende Einlasskanäle 60 realisiert sind, sondern durch zwei V-förmig verlaufende Zuflusskanäle 600, die in Bezug auf die Drehachse A einen Winkel nahe bei 90° einnehmen und von einem einzigen Zufluss 601 gespeist werden. Um die mechanische Stabilität des Stators 51 zu gewährleisten, ist ein ringförmiges Brückenelement 52 aus leichtem Kunststoff vorgesehen, das mechanisch die Lücke L schliesst, durch die der Auslasskanal 7 radial nach aussen vom Pumpengehäuse 2 weg geführt ist. Für die V-förmig verlaufenden Zuflusskanäle 600 bzw. für den Zufluss 601 ist im Stator 51 eine zusätzliche Lücke L1 vorgesehen.

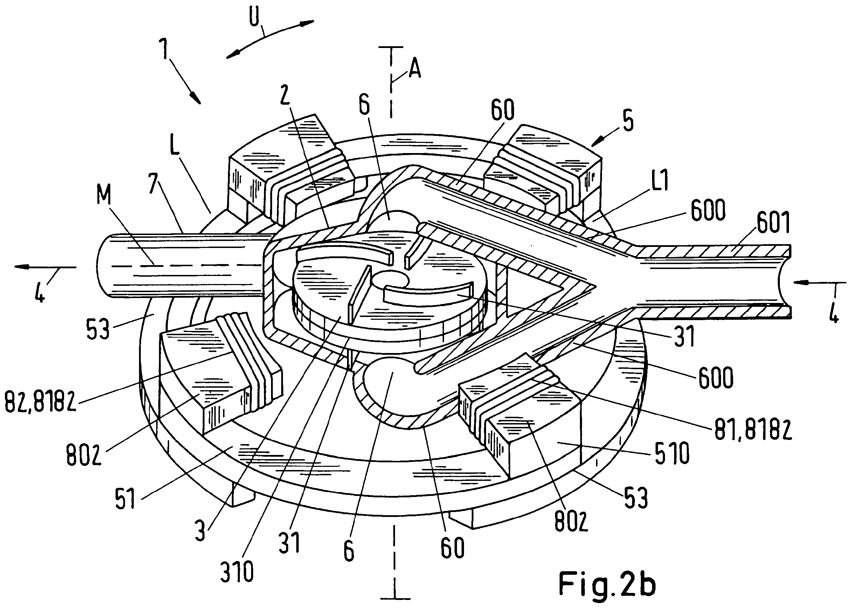

Fig. 2b zeigt ein Ausführungsbeispiel gemäss Fig. 2a mit einem stabförmigem Spulenkern 802. Da die Spulenkerne 802 stabförmig und nicht E-förmig ausgebildet sind, muss der Rückschluss des magnetischen Flusses über den Stator 51 erfolgen. Daher ist der Stator 51 der Rotationspumpe 1 gemäss Fig. 2b auch ein ferromagnetischer Stator 51, der hier aus Eisen ist. Um einerseits die mechanische Stabilität des Stators 51 zu gewährleiten und gleichzeitig einen möglichst zuverlässigen magnetischen Rückschluss für den magnetischen Fluss über den Sator 51 zu gewährleisten, ist an den Lücken L und L1 jeweils ein ferromagnetisches ringförmiges Schlusselement 53 vorgesehen, die im Beispiel der Fig. 2b ebenfalls aus Eisen sind.

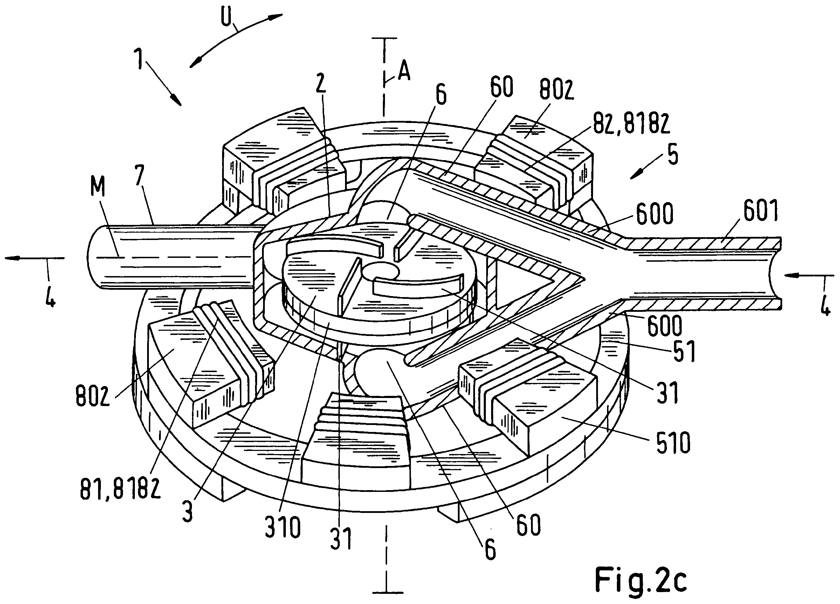

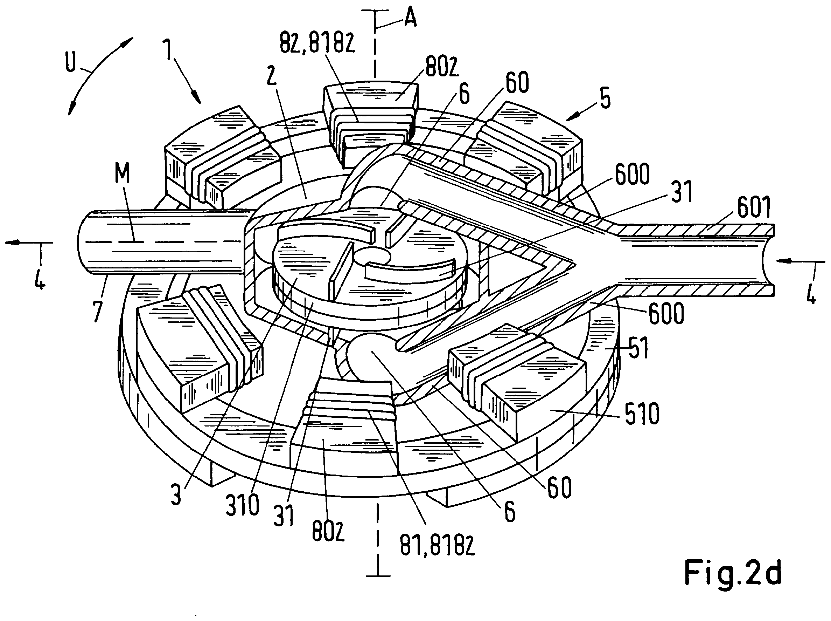

Die Fig. 2c zeigt ein erstes anderes Ausführungsbeispiel gemäss Fig. 2b mit fünf asymmetrisch angeordneten Spulenkernen 802, die Fig. 2d ein zweites anderes Ausführungsbeispiel gemäss Fig. 2b mit sechs symmetrisch angeordneten Spulenkernen 802.

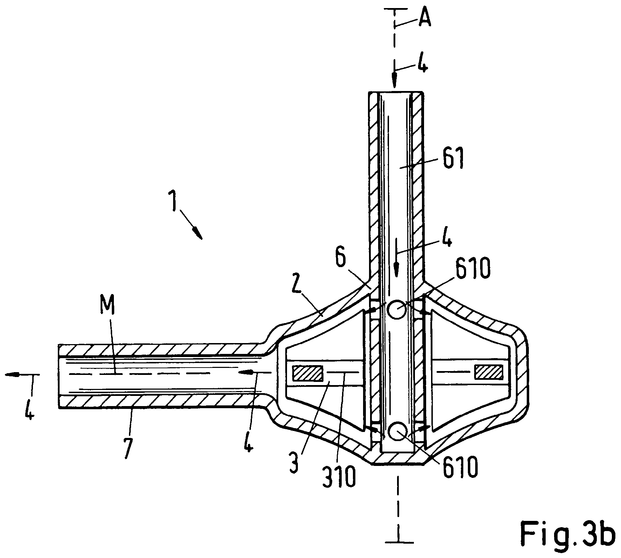

Bei den nun folgenden Ausführungsbeispielen ist in den Fig. 3b bis Fig. 6c der Antrieb 5 mit Stator 51 aus Gründen der Übersichtlichkeit nicht dargestellt.

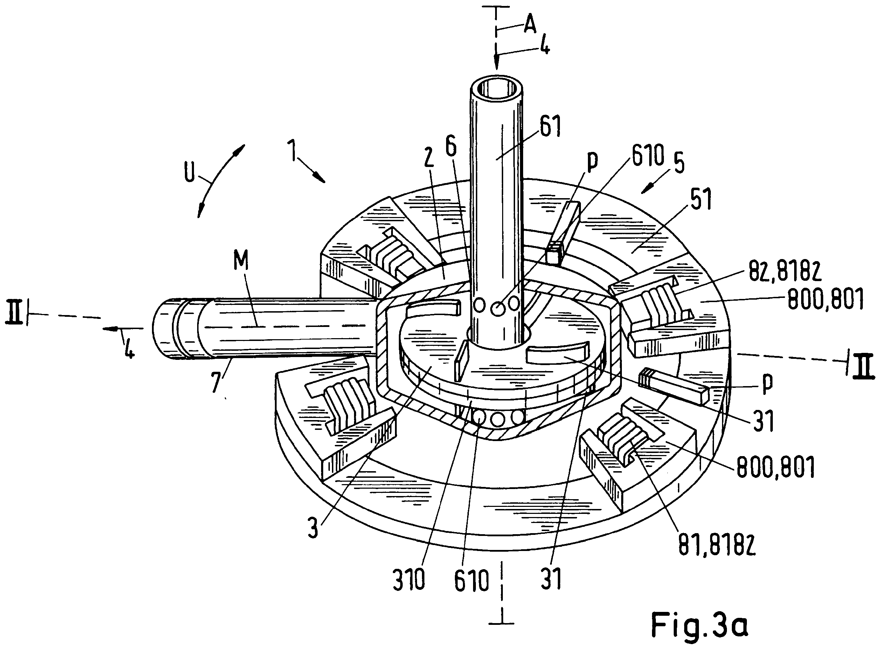

Anhand der Fig. 3a bzw. Fig. 3b, die zur Verdeutlichung einen Schnitt entlang der Schnittlinie II-II gemäss Fig. 3a zeigt, wird ein weiteres Ausführungsbeispiel einer erfindungsgemässen Rotationspumpe 1 mit einem einzigen axialen Einlasskanal 61 schematisch erläutert. Das Ausführungsbeispiel der Fig. 3a bzw. Fig. 3b unterscheidet sich von dem der Fig. 1a bzw. Fig. 1b nur dadurch, dass die Zuführung des Fluids 4 in das Pumpengehäuse 2 nicht über zwei gegenüberliegende, in axialer Richtung verlaufende Einlasskanäle 60 erfolgt, sondern über einen einzigen axialen Einlasskanal 61 bewerkstelligt wird.

Dazu ist zentral um die Drehachse A ein axial verlaufender Einlasskanal 61 vorgesehen, der sich durch eine Bohrung im Rotor 3 durch diesen hindurch erstreckt. Zur beidseitigen Beaufschlagung des Rotors 3 mit dem Fluid 4 sind am axialen Einlasskanal 61 in Bezug auf die magnetische Rotorebene 310 beidseitig Austrittsöffnungen 610 vorgesehen, wie besonders gut der Fig. 3b entnommen werden kann. Bei dem speziellen Ausführungsbeispiel der Fig. 3a bzw. 3b ist der Rotor 3 wie bei allen bisher beschriebenen Figuren ein ungedeckter Rotor, das heisst die Rotorschaufeln 31 sind nicht mit einem eigenen Deckel versehen. Die Funktion eines Deckels für die Rotorschaufeln 31 wird im Wesentlichen von den entsprechenden Gehäusebereichen des Pumpengehäuses 2 übernommen. Daher genügt es im Prinzip auch, dass beidseitig von der Rotorebene 310 jeweils nur eine Gruppe von Austrittsöffnungen 610, jeweils im selben Abstand von der Rotorebene 310 vorgesehen ist.

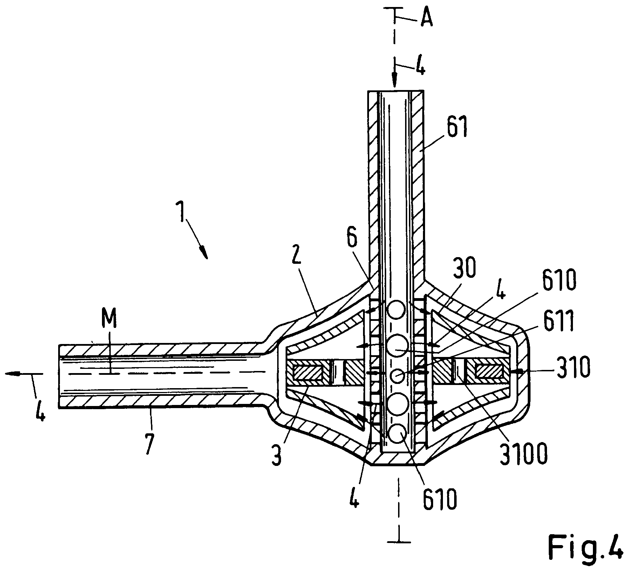

Fig. 4 zeigt ein anderes Ausführungsbeispiel gemäss Fig. 3a bzw. Fig. 3b mit einem gedeckten Rotor 3 mit Rotordeckel 30. Im Unterschied zum Ausführungsbeispiel gem. Fig. 3a bzw. 3b sind zur beidseitigen Beaufschlagung des Rotors 3 mit dem Fluid 4 am axialen Einlasskanal 61 in Bezug auf die magnetische Rotorebene 310 beidseitig Austrittsöffnungen 610 in verschiedenen Abständen zur magnetischen Rotorebene 310 vorgesehen. Die Austrittsöffnungen 610 haben dabei unterschiedliche Grössen. Die Austrittsöffnungen 610, die den grössten Abstand von der magnetischen Rotorebene 310 haben, haben einen kleineren Durchmesser als diejenigen Austrittsöffnungen 610, die näher an der magnetischen Rotorebene 310 liegen. Das trägt der Geometrie des gedeckten Rotors 3 Rechnung, wodurch stabilere Laufeigenschaften des Rotors ermöglicht werden.

Ausserdem ist zusätzlich auf Höhe der magnetischen Rotorebene 310 eine zentrale Austrittsöffnung 611 am Einlasskanal 61 vorgesehen, so dass der Rotor 3 im Bereich der Bohrung, durch die der Einlasskanal 61 durch den Rotor 3 hindurch geführt ist, in radialer Richtung, sowohl axial wie auch radial symmetrisch, mit dem Fluid 4 beaufschlagbar ist. Dadurch wird insbesondere eine noch weiter verbesserte Stabilisierung des Rotors 3 im Betriebszustand erreicht. Zusätzlich sind darüber hinaus axiale Verbindungsbohrungen 3100 für das Fluid 4 im Rotor 3 vorgesehen, wodurch das hydrodynamische Verhalten des Rotors 3 in dem Fachmann an sich bekannter Weise weiter positiv beeinflusst wird.

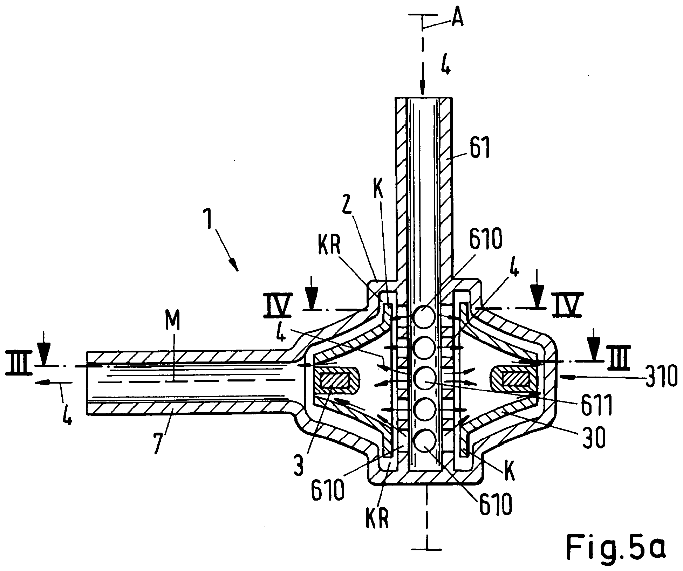

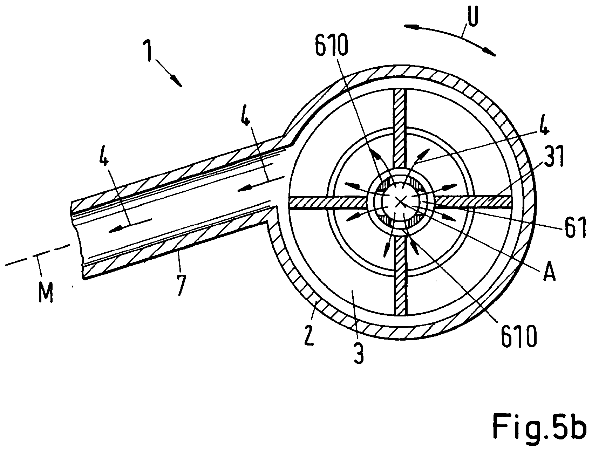

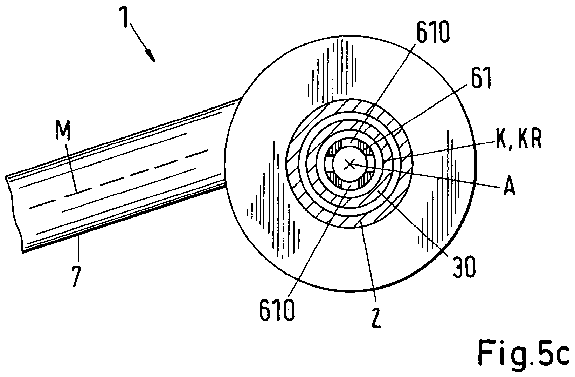

Anhand der Fig. 5a ist ein weiteres Ausführungsbeispiel gemäss Fig. 3a mit gedecktem Rotor 3 mit Rotordeckel 30 schematisch dargestellt, wobei die Fig. 5b zum besseren Verständnis einen Schnitt entlang der Schnittlinie III-III und die Fig. 5c einen Schnitt entlang der Schnittlinie IV-IV gemäss Fig. 5a zeigt.

Das Ausführungsbeispiel gemäss der Fig. 5a bis Fig. 5c unterscheidet sich von demjenigen der Fig. 4 einerseits dadurch, dass der Rotor 3 der Fig. 5a bis Fig. 5c ein kreisringförmiger Rotor 3 ist, also im Prinzip ein Rotor 3 mit einer sehr grossen Bohrung, durch die sich der Einlasskanal 61 hindurch erstreckt. Der Rotordeckel 30 der Rotorschaufeln 31 und die Rotorschaufeln 31 selbst erstrecken sich dabei in radialer Richtung über die kreisringförmige Scheibe des Rotors 3 hinaus bis in die Nähe des Einlasskanals 61.

Ein weiterer entscheidender Unterschied zur Fig. 4 besteht darin, dass der gedeckte Rotor 3 in den beiden axialen Richtungen nach aussen gezogenen Kragen K aufweist, die jeweils in einen ringförmigen Kragenraum KR hineinreichen. Die beiden Kragen K wirken mit ihrem zugeordneten Kragenraum KR dabei als Regelventil zusammen. Je nachdem wie weit der Rotor 3 von seiner axialen Gleichgewichtsposition nach oben oder unten abweicht, sind die in axialer Richtung äusseren Bohrungen 610 entsprechend mehr oder weniger stark vom entsprechenden Kragen K überdeckt. Wird der Rotor 3 in axialer Richtung durch eine Störung aus seiner Gleichgewichtslage z.B. darstellungsgemäss nach oben verschoben, so wird die entsprechend axial aussen liegende Bohrung 610 weniger verdeckt, wodurch der Druck in der Rotationspumpe 1 sinkt, weil der über die Bohrung 610 anliegende Einlassdruck natürlich stets kleiner ist, als der am Auslass der Rotationspumpe liegende Auslassdruck. Oberhalb des Deckels des Rotors 3 herrscht jedoch der Auslassdruck, so dass der Rotor 3 durch die Druckdifferenz wieder in die axiale Gleichgewichtsposition zurückgeschoben wird. Der Kragen K mit dem zugeordneten Kragenraum KR wirkt somit als automatisches hydraulisches Regelventil.

Da der darstellungsgemäss obere Teil des gedeckten Rotors 3 und der darstellungsgemäss untere Teil des gedeckten Rotors 3 zwischen der Rotorscheibe und dem Einlasskanal 61 offen miteinander verbunden sind, haben die am axialen Einlasskanal 61 in Bezug auf die magnetische Rotorebene 310 beidseitig in verschiedenen Abständen zur magnetischen Rotorebene 310 angeordneten Austrittsöffnungen 610 jeweils die gleiche Grösse. Ausserdem hat die zusätzlich auf Höhe der magnetischen Rotorebene 310 vorgesehene zentrale Austrittsöffnung 611 ebenfalls die gleiche Grösse wie die übrigen Austrittöffnungen 610, so dass der gedeckte Rotor 3 in radialer Richtung, sowohl axial wie auch radial symmetrisch, über alle Austrittsöffnungen 610 und die zentrale Austrittsöffnung 611 gleichmässig, dass heisst mit gleichem Fluiddurchfluss mit dem Fluid 4 beaufschlagbar ist. Es versteht sich von selbst, dass bei einem kreisringförmigen Rotor in der Regel keine axialen Verbindungsbohrungen 3100 für das Fluid 4 im Rotor 3 vorgesehen sein müssen.

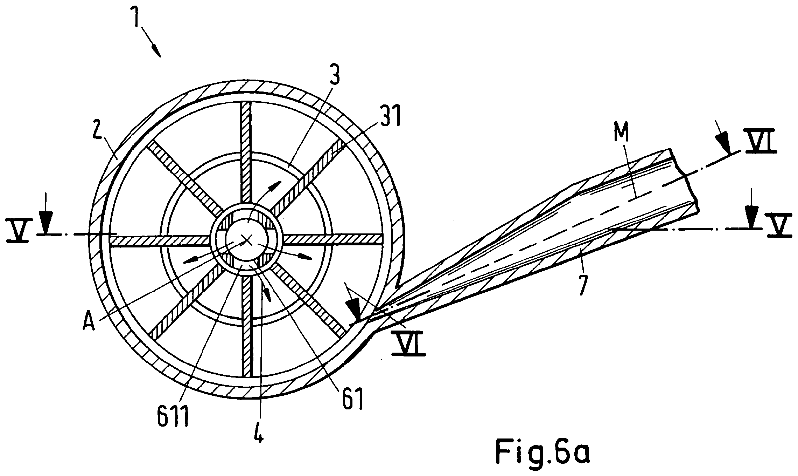

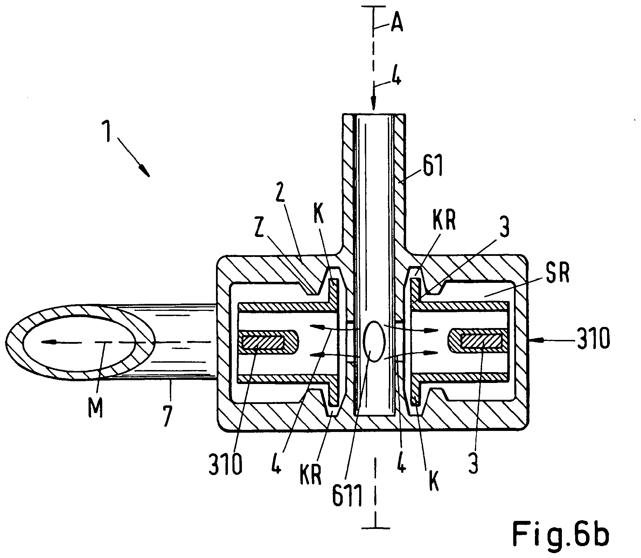

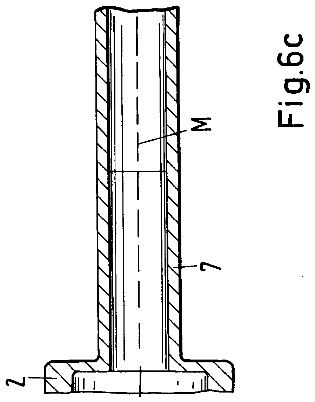

Fig. 6a zeigt ein viertes Ausführungsbeispiel gemäss Fig. 3a mit gedecktem Rotor und asymmetrischem Auslasskanal, wobei Fig. 6b einen Schnitt entlang der Schnittlinie V-V gemäss Fig. 6a und Fig. 6c einen Schnitt entlang der Schnittlinie VI-VI gemäss Fig. 6a in schematischer Weise zeigt. Wie insbesondere der Fig. 6b deutlich zu entnehmen ist, ist am Einlasskanal 61 keine Austrittsöffnung 610 vorgesehen, sondern nur eine zentrale Austrittsöffnung 611 mit stark vergrössertem Querschnitt, so dass durch die zentrale Austrittsöffnung 611 allein, der gedeckte kreisringförmige Rotor 3 beidseitig der Rotorebene 310 mit Fluid 4 beaufschlagbar ist.

Aufgrund der besonderen Geometrie der Rotationspumpe 1 gemäss Fig. 6a bis Fig. 6c, insbesondere wegen der besonderen Ausgestaltung des Auslasskanals 7, dessen in der magnetischen Rotorebene 310 gelegener Querschnitt sich erweiternd vom Pumpengehäuse 2 weg erstreckt, kann wegen des engen Querschnitts des Auslasskanals 7 am Pumpengehäuse 2 bevorzugt ein erhöhter Druck erzeugt werden, der jedoch in der Regel gleichzeitig mit einer reduzierten Förderrate der Rotationspumpe 1 erkauft werden muss.

Die gedeckten Rotoren 3 gemäss den Fig. 4 bis Fig. 6c haben darüber hinaus, wie bereits bei der Beschreibung der Fig. 5a dargelegt, den Vorteil, dass der Rotor 3 gegen eine axiale Verschiebung, zum Beispiel aufgrund einer Druckschwankung im Fluid 4 oder infolge einer in Bezug auf die magnetische Rotorebene 310 asymmetrischen Druckbeaufschlagung des Rotors 3 durch das Fluid 4, in besonderem Masse automatisch hydraulisch stabilisiert ist.

Betrachtet man sich zum Beispiel stellvertretend die Rotationspumpe 1 gemäss Fig. 5a oder Fig. 6b, so erkennt man leicht, dass dann, wenn der Rotor 3 sich zum Beispiel asymmetrisch in eine der beiden axialen Richtungen verschiebt, beispielsweise darstellungsgemäss nach oben verschiebt, sich oben zwischen Pumpengehäuse 2 und dem Rotordeckel 30 des Rotors 3 ein entsprechender Überdruck ausbildet, der den Rotor 3 wieder nach unten in Richtung der Gleichgewichtsposition zurück zwingt, in der die magnetische Rotorbene 310 und die magnetische Statorebene 510 koinzidieren. Ausserdem wird bei einer Verschiebung des Rotors 3 aus seiner Gleichgewichtslage, der Rotor 3 über die Austrittsöffnungen 610 bzw. über die zentrale Austrittsöffnung 611 in Bezug auf die axiale Richtung asymmetrisch mit Fluid 4 beaufschlagt, was ebenfalls dazu führt, dass dadurch eine entsprechende rückstellende Kraft erzeugt wird, die den Rotor 3 wieder in die Gleichgewichtslage zurück zu bringen versucht.

Dabei ist die Regelwirkung bei dem Ausführungsbeispiel der Fig. 6a bzw. Fig. 6b deutlich stärker ausgeprägt, als bei demjenigen der Figuren 5. Auch beim Beispiel der Figuren 6 ist am gedeckten Rotor 3 in den beiden axialen Richtungen jeweils ein nach aussen gezogenen Kragen K vorgesehen, der jeweils in einen ringförmigen Kragenraum KR hineinreicht. Hier ist es im Gegensatz zum Beispiel der Figuren 5 jedoch so, dass innen am Rotorgehäuse 2 jeweils ein ringförmiger Abstandskranz Z vorgesehen ist, so dass die maximale axiale Auslenkung des Rotors 3 durch den Abstandskranz Z derart begrenzt ist, dass auch bei der maximal möglichen axialen Auslenkung des Rotors 3 zwischen dem Deckel des Rotors 3 und dem Rotorgehäuse 2 ein Steuerraum SR gebildet wird. Ausserdem ist am zentralen Einlasskanal 61 nur eine zentrale Austrittsöffnung 611 vorgesehen, die zum Beispiel kreisförmig oder aber auch anders, wie gezeigt unter anderem auch oval ausgestaltete sein kann. Im Unterscheid zu den Figuren 5 wird somit das Innere des Rotors 3 immer gleichmässig mit dem Einlassdruck über die zentrale Austrittsöffnung 611 beaufschlagt.

Wird der Rotor 3 in axialer Richtung durch eine Störung aus seiner Gleichgewichtslage z.B. darstellungsgemäss nach oben verschoben, so wird durch das Zusammenwirken vom oberen Kragen K mit dem oberen Kragenraum KR der Eingangsdruck, der an der Austrittsöffnung liegt, im wesentlichen vom oberen Steuerraum SR abgeriegelt, so dass im oberen Steuerraum SR am Deckel des Rotors 3 im wesentlichen der höhere Ausgangsdruck anliegt, wodurch der Rotor 3 automatisch darstellungsgemäss nach unten verschoben wird.

Im umgekehrten Fall, wenn der Rotor 3 darstellungsgemäss in axialer Richtung nach unten ausgelenkt wird, wirkt im unteren Steuerraum SR im wesentlichen nur der höhere Ausgangsdruck während im oberen Steuerraum SR ein bestimmter mittlerer Druck, gebildet aus dem Eingangsdruck und dem Ausgangsdruck anliegt, so dass auch in diesem Fall der Rotor 3 wieder automatisch in seine axiale Gleichgewichtsposition zurückgeschoben wird.

Wie der Fachmann ohne Schwierigkeiten erkennt, bilden somit insbesondere die gedeckten Rotoren 3 in Wechselwirkung mit dem Pumpengehäuse 2 einen hydraulischen Proportional Regler (P-Regler), der die axiale Gleichgewichtsposition des Rotors 3 automatisch hydraulisch stabilisiert.

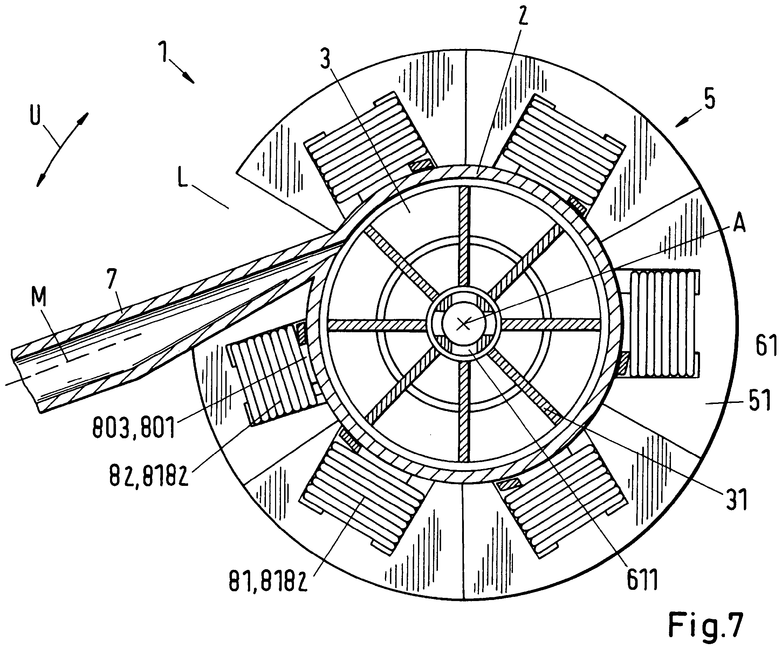

Die Fig. 7 bis Fig. 11b zeigen weitere Ausführungsbeispiele von erfindungsgemässen Rotationspumpen 1, die gemäss Fig. 6a bis Fig. 6c einen Auslasskanals 7 haben, dessen in der magnetischen Rotorebene 310 gelegener Querschnitt sich erweiternd vom Pumpengehäuse 2 weg erstreckt. Insbesondere illustrieren die vorgenannten Figuren verschiedene Statoranordnungen, mit denen Rotationspumpen 1 mit asymmetrischen Auslasskanal 7 besonders vorteilhaft realisiert werden können.

Fig. 7 zeigt ein solches Ausführungsbeispiel einer erfindungsgemässen Rotationspumpe 1 mit einem inneren Spulenkern 803 innerhalb des Stators 51. Der Stator 51 selbst ist dabei im Bereich der Lücke L, durch die sich der Auslasskanal 7 erstreckt, so ausgestaltet, dass die Lücke L möglichst klein gehalten wird. Da der Stator 51 innere, stabförmige Spulenkerne 803 hat, ist der Stator 51 ein ferromagnetischer Stator 51.

Dabei versteht es sich von selbst, dass der Stator 51 zusätzlich oder alternativ auch innere E-förmige Spulenkerne 801 haben kann. Wenn der Stator 51 zum Beispiel nur innere E-förmige Spulenkerne 801 hat, braucht der Stator 51 natürlich nicht unbedingt ferromagnetisch zu sein, sondern kann zum Beispiel aus einem anderen Material, zum Beispiel aus Kunststoff sein.

Durch die Lücke L wird somit eine Symmetrie des magnetischen Flusses bzw. der Rückschluss des magnetischen Flusses im ferromagnetischen Sator 51 deutlich gestört. Um dies auszugleichen, haben die inneren Spulenkerne 803 verschiedne Grösse und sind leicht asymmetrisch über die Umfangsrichtung U des Stators 51 verteilt, so dass sich insgesamt ein magnetischer Fluss einstellt bzw. ein magnetischer Rückschluss derart über den ferromagnetischen Rotor 51 hergestellt wird, dass der Rotor 3 im Betriebszustand zuverlässig im Stator 51 gelagert ist und sicher angetrieben werden kann.

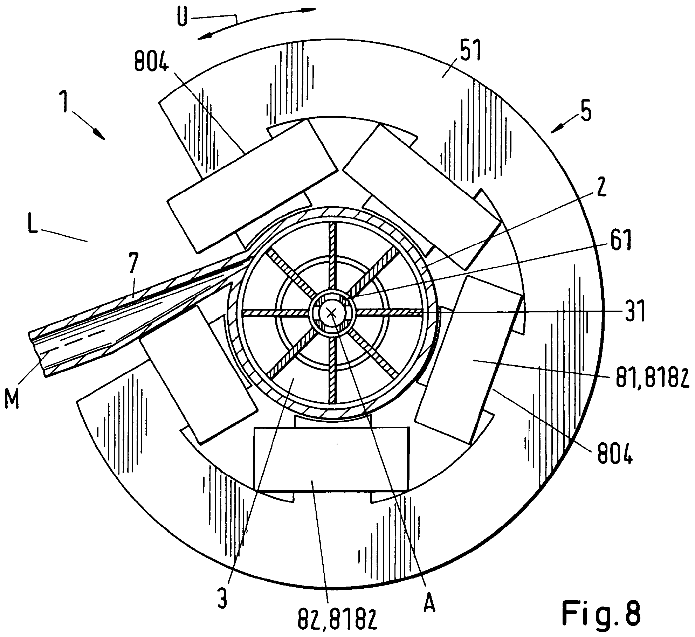

In Fig. 8 ist ein anderes Ausführungsbeispiel mit einem sich zum Rotor 3 hin erstreckenden Statorzahn 804 dargestellt. Die dem asymmetrischen Auslasskanal 7 direkt benachbarten Statorzähne 804 sind geometrisch dabei so angeordnet und ausgestaltet, dass sie der asymmetrischen Form des Auslasskanals 7 möglichst optimal angepasst sind und die Grösse der Lücke L möglichst minimiert wird. Da auch hier, wie der Fachmann sofort erkennt, der Stator 51 ein ferromagnetischer Stator 51 sein muss, über den der magnetische Rückschluss erfolgt, wird die auch hier analog zu dem Beispiel der Fig. 7 auftretende magnetische Asymmetrie dadurch kompensiert, dass die Statorzähne 804 verschieden gross sind und geeignet asymmetrisch ausgebildet und über den Umfang U des Stators 51 geeignet angeordnet sind.

Wegen der relativ grossen Lücke L, die hier nicht mit einem ferromagnetischen Material geschlossen ist, muss der Stator 51 eine ausreichende Breite haben, da zum Schliessen des magnetischen Flusses dieser über den gesamten Umfang des Stators 51 geführt werden muss. Die Breite des Stators 51 wird dabei in der Praxis bevorzugt ungefähr gleich oder grösser als die Breite der Statorzähne gewählt.

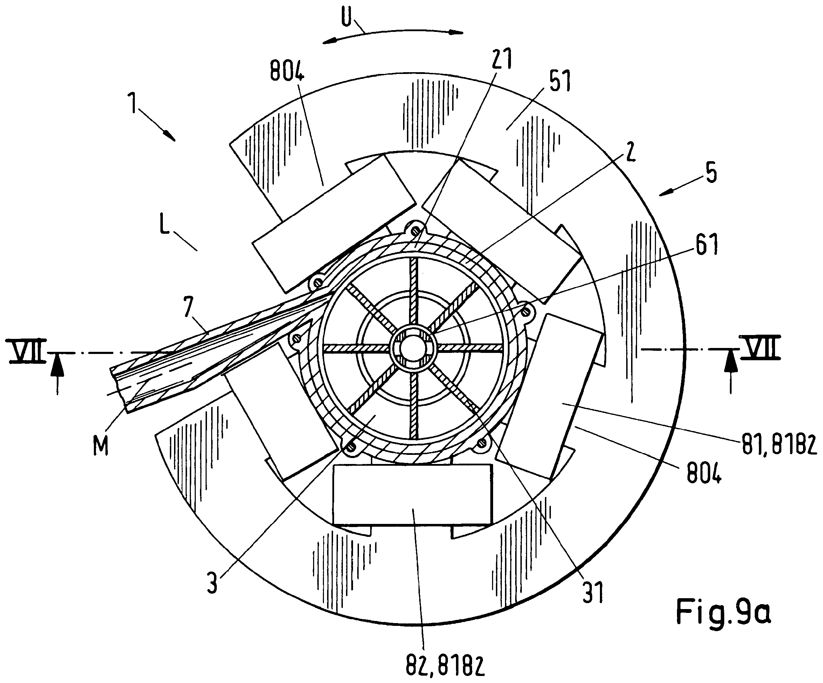

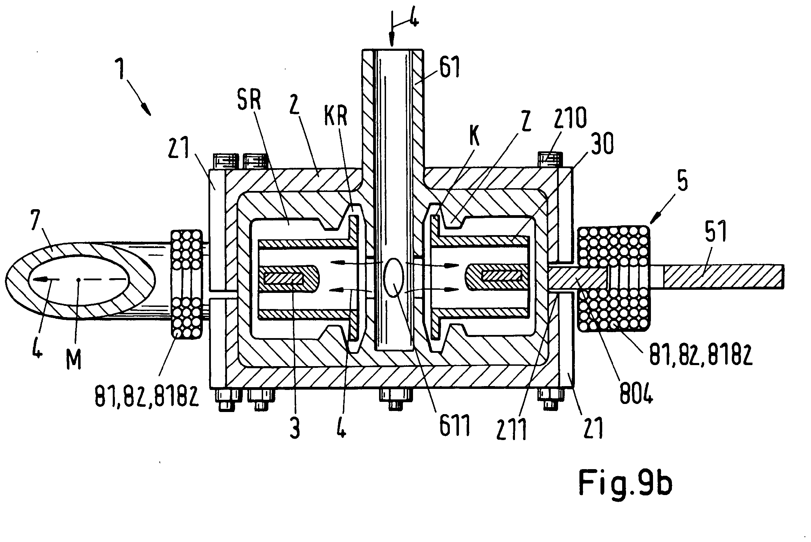

In Fig. 9a ist ein zweites Ausführungsbeispiel gemäss Fig. 8 mit einer Gehäuseschale 21 für das Pumpengehäuse 2 schematisch dargestellt. Die Fig. 9b zeigt dabei zum besseren Verständnis einen Schnitt entlang der Schnittlinie VII-VII gemäss Fig. 9a. Die axiale Positionsregulierung erfolgt dabei völlig analog wie bei Fig. 6b bereits ausführlich beschrieben.

Sehr häufig muss der Luftspalt zwischen Stator 51 und Rotor 3 möglichst dünn sein, das heisst der Abstand zwischen Stator 51 oder Statorzahn 804 und Rotor 3 soll häufig möglichst klein sein. Das sich zwischen Rotor 3 und Stator 51 bzw. Statorzahn 804 jedoch das Pumpengehäuse 2 befindet, muss zumindest im Bereich des Stators 51 bzw. des Statorzahns 804 eine Wandstärke des Pumpengehäuses 2 möglichst klein sein. Das führt natürlich zu einer entsprechenden mechanischen Schwächung des Pumpengehäuses 2, was insbesondere dann von Relevanz ist, wenn durch die Rotationspumpe 1 ein relativ hoher Druck erzeugt wird, wie zum Beispiel bei der Rotationspumpe 1 gemäss Fig. 9a bzw. Fig. 9b, bei welcher die Wandstärke des Pumpengehäuses zum Beispiel nur bei 1mm bis 1.5mm liegt.

In einem solchen Fall kann besonders vorteilhaft zur mechanischen Verstärkung des Pumpengehäuses 2 zusätzliche eine um das Pumpengehäuse 2 angeordnete Gehäuseschale 21 vorgesehen werden. Wie besonders gut der Fig. 9b zu entnehmen ist, hat die Gehäuseschale 21 im Bereich der Statorzähne 804 eine Aussparung 211, in der der Statorzahn 804 vorgesehen ist, so dass der Statorzahn 804 direkt bis an das dünne Pumpengehäuse 2 heranreicht wodurch der Abstand zwischen Statorzahn 804 und Rotor 3 minimiert ist. Besonders bevorzugt ist die Gehäuseschale 21 gemäss Fig. 9b zweiteilig ausgestaltet, wobei die beiden Teile zum Beispiel über Schrauben 210 sicher miteinander verbunden sein können.

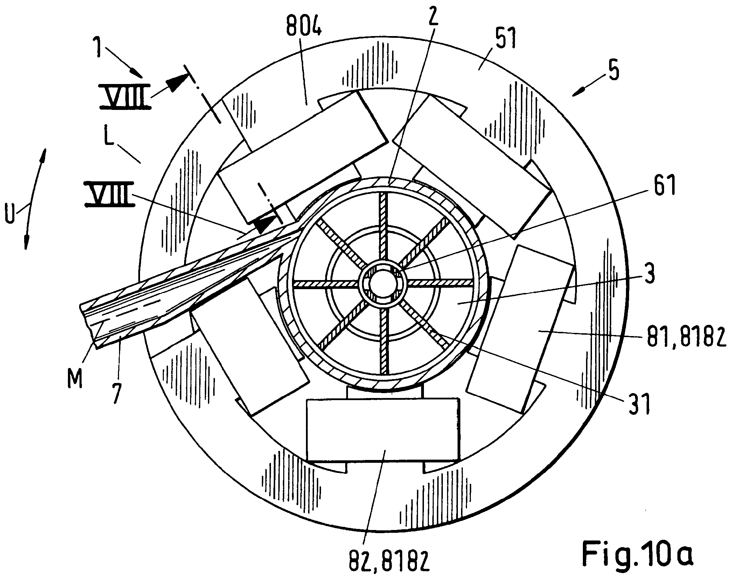

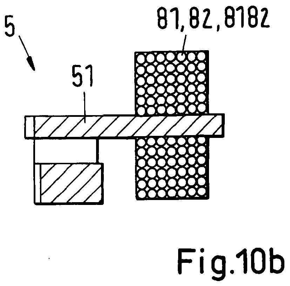

Fig. 10a zeigt ein anderes Ausführungsbeispiel gemäss Fig. 8 mit einem Eisenring 53 als magnetischer Lückenschluss. Da die Spulenkerne 800 stabförmig Statorzähne 804 sind, muss der Rückschluss des magnetischen Flusses über den ferromagnetischen Stator 51 erfolgen, der hier aus Eisen ist. Um einerseits die mechanische Stabilität des Stators 51 zu verbessern, aber vor allem um einen möglichst zuverlässigen magnetischen Rückschluss für den magnetischen Fluss über den Stator 51 zu gewährleisten, ist an der Lücke L ein ferromagnetisches ringförmiges Schlusselement 53, hier ein Eisenringelement 53 vorgesehen.

Dadurch ist einerseits der magnetische Rückschluss über den Stator 51 gewährleistet und andererseits ist die Lücke L geschaffen, so dass der Auslasskanal 7 im Bereich des Stators 51 derart radial vom Pumpengehäuse 2 nach aussen weg geführt ist, dass die Mittelachse M des radialen Auslasskanals 7 mit der magnetischen Rotorebene 310 oder mit der magnetischen Statorebene 510 koinzidiert.

Dadurch, dass die Lücke L hier mit einem ferromagnetischen Material geschlossen ist, kann der Stator 51, anders als bei dem Beispiel der Fig. 7 bis Fig. 9 eine deutlich reduzierte Breite haben, da zum Schliessen des magnetischen Flusses dieser nicht über den gesamten Umfang des Stators 51 geführt werden muss, sondern zwischen benachbarten Spulenkernen geschlossen werden kann. Die Breite des Stators 51 wird dabei in der Praxis bevorzugt ungefähr gleich oder kleiner der halben Breite der Statorzähne gewählt.

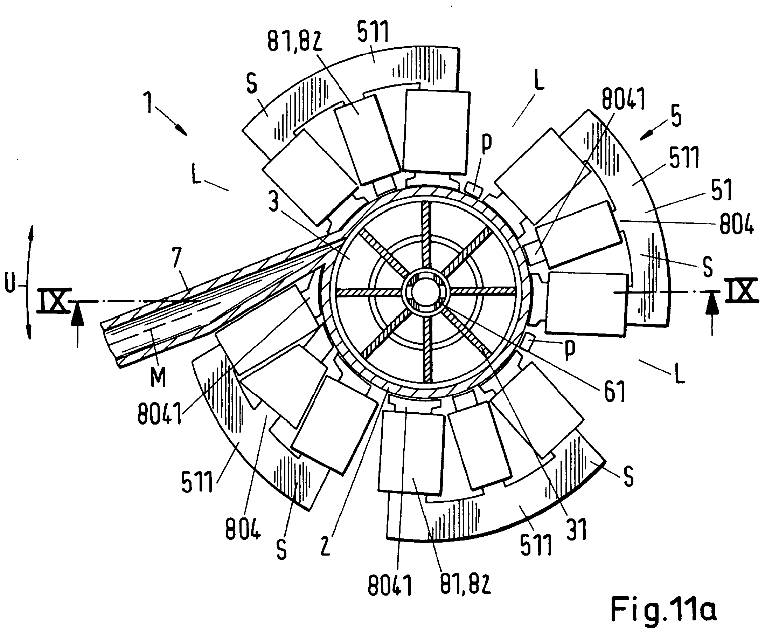

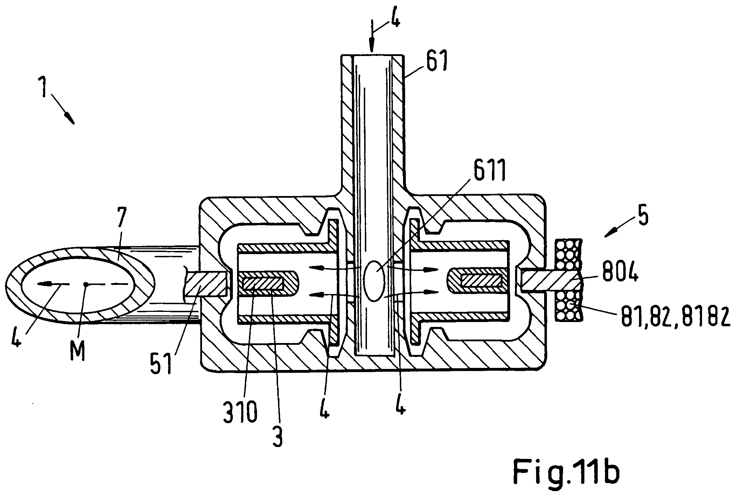

Die Fig. 11a zeigt schliesslich ein weiteres Ausführungsbeispiel gemäss Fig. 8 mit geometrisch verschieden ausgebildeten Spulenkernen, wobei Fig. 11b einen Schnitt entlang der Schnittlinie IX-IX gemäss Fig. 11a zeigt. Ein besonderer Vorteil des Ausführungsbeispiels gemäss Fig. 11a bzw. Fig. 11b besteht dabei in seinem modularen Aufbau. Die dargestellten vier einzelnen Segmente S können jeweils einzelnen vom Rotorgehäuse 2 in radialer Richtung nach aussen entfernt bzw. ausgetauscht werden, wodurch insbesondere eine Wartung oder Reparatur der Rotationspumpe 1 sehr vereinfacht und verbilligt wird.

Im speziellen Beispiel gemäss Fig. 11 trägt dabei jedes Segment S drei Spulen, wobei in der Praxis häufig der mittlere Spulenkern eines jeden Segments S bevorzugt die Lagerwicklung 82 trägt und die beiden äusseren Spulenkerne bevorzugt je eine Antriebsspule 81 tragen.

Wie insbesondere der Fig. 11b zu entnehmen ist, eignet sich die Anordnung gemäss Fig. 11a besonders dann, wenn das Pumpengehäuse 2 einem relativ hohen Druck standhalten muss, also mechanisch sehr stabil ausgestaltet sein muss, aber aus bestimmten Gründen, zum Beispiel aus Platzgründen, aus Gewichtsgründen oder einfach um die Konstruktion der Rotationspumpe 1 möglichst einfach zu halten, keine zusätzliche Gehäuseschale 21 für das Pumpengehäuse 2 vorgesehen werden kann.

In einem solchen Fall muss das Pumpengehäuse 2 zumindest grösstenteils eine genügend grosse Wandstärke haben, um dem hydraulischen Druck standzuhalten, wobei gleichzeitig der Abstand zwischen Statorzähnen 804 und Rotor 3 möglichst klein gehalten werden muss.

Diese beiden Bedingungen, die sich zunächst gegenseitig auszuschliessen scheinen, können dadurch realisiert werden, dass der Stator 51 wie in Fig. 11a gezeigt als mehrteiliger Stator 51 mit mehreren Statorsegmenten 511 ausgeführt wird. Dann kann die Wandstärke des Pumpengehäuses 2 grösstenteil ausreichend dick gehalten werden, insbesondere im Bereich zwischen den Statorsegmenten 511. Wie in Fig. 11b deutlich gezeigt, ist im Wesentlichen nur im Bereich zwischen den Statorzähnen 804 und dem Rotor 3 die Wandstärke des Pumpengehäuses 2 soweit reduziert, dass eine sichere Lagerung und ein zuverlässiger Antrieb des Rotors 3 gewährleistet ist.

Die dadurch entstehende Asymmetrie im magnetischen Rückschluss im Stator 51 wird dadurch kompensiert, dass die Statorzähne 804 und / oder die Spulenwicklungen 81, 82 zumindest teilweise unterschiedliche Grösse und / oder Form haben und in geeigneter Weise über die Umfangsrichtung U des Stators angeordnet sind. Zusätzlich sind die Polschuhe 8041 der Statorzähne 804 entsprechend verschiedenartig ausgebildet, wodurch ebenfalls magnetische Asymmetrien im Stator 51 kompensiert werden können.

Es versteht sich, dass alle oben beschriebenen erfindungsgemässen Ausführungsbeispiele nur beispielhaft bzw. exemplarisch zu verstehen sind und die Erfindung insbesondere, aber nicht nur, alle geeigneten Kombinationen der beschriebenen Ausführungsbeispiele umfasst.

## Patentansprüche

1. Rotationspumpe, umfassend einen in einem Pumpengehäuse (2) angeordneten magnetischen Rotor (3) mit einer magnetischen Rotorebene (310), welcher Rotor (3) zum Fördern eines Fluids (4) mit einem Antrieb (5) in Wirkverbindung steht, wobei am Pumpengehäuse (2) eine Eintrittsöffnung (6) zum Einlass des Fluids (4) in das Pumpengehäuse (2), sowie ein radialer Auslasskanal (7) zur Beförderung des Fluids (4) aus dem Pumpengehäuse (2) heraus vorgesehen ist, und der Antrieb (5) ein lagerloser Motor mit einem als Lager- und Antriebsstator ausgestalteten Stator (51) mit einer magnetischen Statorebene (510) ist, welcher Stator (51) eine in der Statorebene (510) liegende Antriebsspule (81) und Lagerspule (82) und / oder eine Antriebslagerspule (8182) trägt, wobei der Rotor (3) innerhalb des Stators (51) magnetisch berührungslos gelagert ist, **dadurch gekennzeichnet, dass** eine axiale Höhe (H) des Rotors (3) kleiner oder gleich einem halben Durchmesser (D) des Rotors (3) ist, so dass der Rotor (3) in Bezug auf die magnetische Statorebene (510) sowohl gegen eine axiale Verschiebung als auch gegen eine Verkippung aus einer Gleichgewichtslage passiv durch Reluktanzkräfte magnetisch stabilisiert ist, der Auslasskanals (7) im Bereich des Stators (51) derart radial vom Pumpengehäuse (2) nach aussen weg geführt ist, dass eine Mittelachse (M) des radialen Auslasskanals (7) mit der magnetischen Rotorebene (310) oder mit der magnetischen Statorebene (510) koinzidiert.

2. Rotationspumpe nach Anspruch 1, wobei der Stator (51) in Umfangsrichtung eine Lücke (L) aufweist, in welcher der radiale Auslasskanal (7) angeordnet ist.

3. Rotationspumpe nach Anspruch 1 oder 2, wobei der Stator (51) ferromagnetisch ist.

4. Rotationspumpe nach einem der vorangehenden Ansprüche, wobei eine Antriebsspule (81) und / oder eine Lagerspule (82) und / oder eine Antriebslagerspule (8182) an einem Spulenkern (800, 801, 802, 803, 804) vorgesehen ist.

5. Rotationspumpe nach Anspruch 4, wobei der Spulenkern (800, 801, 802, 803, 804) in Form eines E-förmigen Spulenkerns (801) am Stator (51) vorgesehen ist.

6. Rotationspumpe nach einem der Ansprüche 4 oder 5, wobei der Spulenkern (800, 801, 802, 803, 804) in Form eines stabförmigen Spulenkerns (802) am Stator (51) vorgesehen ist.

7. Rotationspumpe nach einem der Ansprüche 4 bis 6, wobei der Spulenkern (800, 801, 802, 803, 804) in Form eines inneren Spulenkerns (803) innerhalb des Stator (51) vorgesehen ist.

8. Rotationspumpe nach einem der Ansprüche 4 bis 7, wobei der Spulenkern (800, 801, 802, 803, 804) in Form eines sich zum Rotor (3) hin erstreckenden Statorzahns (804) am Stator (51) ausgebildet ist.

9. Rotationspumpe nach einem der Ansprüche 4 bis 8, wobei zwei Spulenkerne (800, 801, 802, 803, 804) an ein und demselben Stator (51) geometrisch verschieden ausgebildet sind.

10. Rotationspumpe nach einem der vorangehenden Ansprüche, wobei zwei Antriebsspulen (81) in Bezug auf die Umfangsrichtung des Stators (51) asymmetrisch geordnet sind.

11. Rotationspumpe nach einem der vorangehenden Ansprüche, wobei zwei Lagerspulen (82) in Bezug auf die Umfangsrichtung des Stators (51) asymmetrisch geordnet sind.

12. Rotationspumpe nach einem der vorangehenden Ansprüche, wobei zwei Antriebslagerspulen (8182) in Bezug auf die Umfangsrichtung des Stators (51) asymmetrisch geordnet sind.

## Claims

1. A rotary pump, including a magnetic rotor (3) arranged in a pump housing (2) and having a magnetic rotor plane (310), which rotor (3) is operatively connected to a drive (5) for conveying a fluid (4), wherein an inlet opening (6) is provided at the pump housing (2) for the inlet of the fluid (4) into the pump housing (2) and a radial outlet passage (7) is provided for conveying the fluid (4) out of the pump housing (2) and wherein the drive (5) is a bearingless motor having a stator (51) configured as a bearing stator and drive stator and having a magnetic stator plane (510), which stator (51) bears a drive coil (81) and a bearing coil (82) lying in the stator plane (510) and/or a drive bearing coil (8182), wherein the rotor (3) is magnetically contactlessly journalled within the stator (51) and an axial height (H) of the rotor (3) is smaller than or equal to half a diameter (D) of the rotor (3) so that the rotor (3) is passively magnetically stabilized by reluctance forces with respect to the magnetic stator plane (510) both against an axial displacement and against a tiling from an equilibrium position, **characterized in that** the outlet passage (7) is radially outwardly conducted away from the pump housing (2) in the region of the stator (51) such that a center axis (M) of the radial outlet passage (7) coincides with the magnetic rotor plane (310) or with the magnetic stator plane (510).

2. A rotary pump in accordance with claim 1, wherein the stator (51) has a gap (L) in the peripheral direction in which the radial outlet passage (7) is arranged.

3. A rotary pump in accordance with claim 1 or claim 2, wherein the stator (51) is ferromagnetic.

4. A rotary pump in accordance with one of the preceding claims, wherein a drive coil (81) and/or a bearing coil (82) and/or a drive bearing coil (8182) is provided at a coil core (800, 801, 802, 803, 804).

5. A rotary pump in accordance with any one of the preceding claims, wherein the coil core (800, 801, 802, 803, 804) is provided in the form of an E-shaped coil core (801) at the stator (51).

6. A rotary pump in accordance with any one of the preceding claims, wherein the coil core (800, 801, 802, 803, 804) is provided in the form of a bar-shaped coil core (802) at the stator (51).

7. A rotary pump in accordance with any one of the preceding claims, wherein the coil core (800, 801, 802, 803, 804) is provided in the form of an inner coil core (803) within the stator (51).

8. A rotary pump in accordance with any one of the preceding claims, wherein the coil core (800, 801, 802, 803, 804) is configured in the form of a stator tooth (804) extending toward the rotor (3) at the stator (51).

9. A rotary pump in accordance with any one of the preceding claims, wherein two coil cores (800, 801, 802, 803, 804) are geometrically differently configured at one and the same stator (51).

10. A rotary pump in accordance with any one of the preceding claims, wherein two drive coils (81) are asymmetrically ordered with respect to the peripheral direction of the stator (51).

11. A rotary pump in accordance with any one of the preceding claims, wherein two bearing coils (82) are asymmetrically ordered with respect to the peripheral direction of the stator (51).

12. A rotary pump in accordance with any one of the preceding claims, wherein two drive bearing coils (8182) are asymmetrically ordered with respect to the peripheral direction of the stator (51).

## Revendications

1. Une pompe rotative comprenant un rotor magnétique (3) avec un plan du rotor magnétique (310) disposé dans un boîtier de pompe (2), lequel rotor (3) est relié en fonctionnement à un entraînement (5) pour convoyer un fluide (4), dans laquelle une ouverture d'entrée (6) pour l'entrée du fluide (4) dans le boîtier de pompe (2) et un canal de sortie radial (7) pour transporter le fluide (4) hors du boîtier de pompe (2) sont prévus sur le boîtier de pompe (2), et l'entraînement (5) est un moteur sans palier avec un stator (51) conçu comme un stator de palier et d'entraînement avec un plan magnétique de stator (510), lequel stator (51) porte une bobine d'entraînement (81) et une bobine de palier (82) et/ou une bobine de palier d'entraînement (8182) situées dans le plan du stator (510), dans lequel le rotor (3) est monté magnétiquement sans contact à l'intérieur du stator (51), **caractérisé en ce qu'**une hauteur axiale (H) du rotor (3) est inférieure ou égale à un demi diamètre (D) du rotor (3), de sorte que le rotor (3) est stabilisé magnétiquement par rapport au plan magnétique du stator (510) contre le déplacement axial et contre une inclinaison à partir d'une position d'équilibre passivement par des forces de réluctance, le canal de sortie (7) dans la région du stator (51) est guidé radialement vers l'extérieur à partir du boîtier de pompe (2) de telle sorte qu'un axe central (M) du canal de sortie radial (7) coïncide avec le plan magnétique du rotor (310) ou avec le plan magnétique du stator (510).

2. Une pompe rotative selon la revendication 1, dans laquelle le stator (51) présente une brèche (L) dans la direction circonférentielle, dans laquelle le canal de sortie radial (7) est disposé.

3. Une pompe rotative selon la revendication 1 ou 2, dans laquelle le stator (51) est ferromagnétique.

4. Une pompe rotative selon l'une des revendications précédentes, dans laquelle une bobine d'entraînement (81) et/ou une bobine de palier (82) et/ou une bobine de palier d'entraînement (8182) est prévue sur un noyau de bobine (800, 801, 802, 803, 804).

5. Une pompe rotative selon la revendication 4, dans laquelle le noyau de bobine (800, 801, 802, 803, 804) est prévu sur le stator (51) sous la forme d'un noyau de bobine en forme de E (801).

6. Une pompe rotative selon l'une des revendications 4 ou 5, dans laquelle le noyau de bobine (800, 801, 802, 803, 804) est prévu sur le stator (51) sous la forme d'un noyau de bobine en forme de tige (802).

7. Une pompe rotative selon l'une des revendications 4 à 6, dans laquelle le noyau de bobine (800, 801, 802, 803, 804) est prévu à l'intérieur du stator (51) sous la forme d'un noyau de bobine interne (803).

8. Une pompe rotative selon l'une des revendications 4 à 7, dans laquelle le noyau de bobine (800, 801, 802, 803, 804) est conçu sur le stator (51) sous la forme d'une dent de stator (804) qui s'étend vers le rotor (3).

9. Une pompe rotative selon l'une des revendications 4 à 8, dans laquelle deux noyaux de bobine (800, 801, 802, 803, 804) sont géométriquement conçus différemment sur un seul et même stator (51).

10. Une pompe rotative selon l'une des revendications précédentes, dans laquelle deux bobines d'entraînement (81) sont disposées de manière asymétrique par rapport à la direction circonférentielle du stator (51).

11. Une pompe rotative selon l'une des revendications précédentes, dans laquelle deux bobines de palier (82) sont disposées de manière asymétrique par rapport à la direction circonférentielle du stator (51).

12. Une pompe rotative selon l'une des revendications précédentes, dans laquelle deux bobines de palier d'entraînement (8182) sont disposées de manière asymétrique par rapport à la direction circonférentielle du stator (51).
